# EUROPEAN PATENT APPLICATION

(11) **EP 3 996 233 A1**
(43) Date of publication of application: **11.05.2022**
(21) Application number: 20206341.8
(22) Date of filing: 09.11.2020
(51) Int. Cl.: H02J 7/00

(54) **SYSTEMS AND METHODS FOR IDENTIFYING AND DISABLING BATTERY PACKS**

(71) Applicant: Hilti Aktiengesellschaft, 9494 Schaan (LI)
(72) Inventor: Goyal, Varnim, 86916 Kaufering (DE); Mayer, Stefan, 86857 Hurlach (DE)
(74) Representative: Hilti Aktiengesellschaft Corporate Intellectual Property

(57) **Abstract**

A method includes storing unique identification information of a first battery pack 104 within a second battery pack 106. The method further includes removably coupling the second battery pack to a power tool 102 or a battery pack charger 108 and transmitting the unique identification information of the first battery pack from the second battery pack to the power tool or the battery pack charger. The method further includes storing the unique identification information of the first battery pack within the power tool or the battery pack charger. The power tool or the battery pack charger is configured to identify the first battery pack with the stored identification information if the first battery pack is re-coupled to the power tool or the battery pack charger.

## Description

### BACKGROUND

The present disclosure relates generally to the field of power tools, and more particularly to systems and methods for identifying and disabling certain battery packs.

Electrical devices, such as corded or cordless power tools, may be useful in typical construction job sites. Typically, electrical devices include a motor drive and control circuitry for controlling the motor drive. Certain corded power tools may draw power from a fixed power source, while certain cordless power tools may draw power from a rechargeable power source (e.g., battery pack). In certain situations, a user may replace a battery pack when it is at the end of its life cycle, performs inefficiently, and/or is damaged. In certain situations, the user may receive a new battery pack to replace an existing battery pack, as part of a leasing contract or warranty program. However, with a plurality of battery pack accessible or available to a user, it may be difficult to monitor and/or identify which battery packs are no longer in operation because they have been replaced and/or exchanged.

Accordingly, it may be beneficial to provide systems and methods for identifying and monitoring battery packs that have been replaced and/or exchanged by the user. Further, it may be beneficial to provide system and methods for disabling battery packs that should no longer be in operation on a job site because they have been replaced and/or exchanged by the user.

### BRIEF DESCRIPTION

Certain embodiments commensurate in scope with the originally claimed subject matter are summarized below. These embodiments are not intended to limit the scope of the claimed subject matter, but rather these embodiments are intended only to provide a brief summary of possible forms of the subject matter. Indeed, the subject matter may encompass a variety of forms that may be similar to or different from the embodiments set forth below.

In a first embodiment, a method includes storing unique identification information of a first battery pack within a second battery pack. The method further includes removably coupling the second battery pack to a power tool or a battery pack charger and transmitting the unique identification information of the first battery pack from the second battery pack to the power tool or the battery pack charger. The method further includes storing the unique identification information of the first battery pack within the power tool or the battery pack charger. The power tool or the battery pack charger is configured to identify the first battery pack with the stored identification information if the first battery pack is re-coupled to the power tool or the battery pack charger.

In a second embodiment, a method includes receiving, via a power tool or a battery pack charger, unique identification information of a first battery pack. The method further includes storing the unique identification information of the first battery pack within the power tool or the battery pack charger and identifying the first battery pack as improperly coupled when it is removably re-coupled to the power tool or the battery pack charger. The method further includes transmitting a lock command from the power tool or the battery pack charger to the first battery pack.

In a third embodiment, a method includes receiving, via a first battery pack, a lock command from a remote computing device and receiving, via the first battery pack, a self-discharge command from the remote computing device.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a block diagram of an embodiment of a power tool system having a power tool, a first battery pack, a second battery pack, a battery pack charger or gateway, and a communications system for identifying and/or disabling the first battery pack, in accordance with aspects of the present disclosure;
FIG. 2 is an embodiment of a method for transmitting unique identification information from the second battery pack to the power tool and/or battery pack charger, in accordance with aspects of the present disclosure; and
FIG. 3 is an embodiment of a method of transmitting a self-discharge command to the first battery pack from the power tool and/or the battery pack charger, in accordance with aspects of the present disclosure.

### DETAILED DESCRIPTION OF DRAWINGS

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

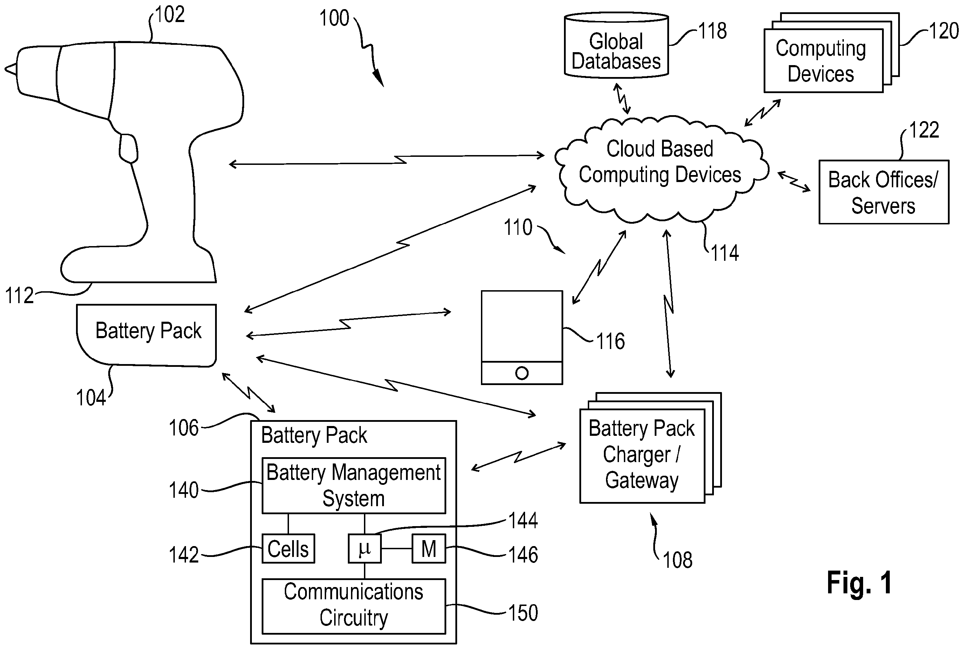

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. Turning now to the drawings, FIG. 1 is a block diagram of an embodiment of a power tool system 100 having a power tool 102, a first battery pack 104, a second battery pack 106, a battery pack charger and/or gateway 108 (or a plurality of battery pack chargers and/or gateways 108), and a communications system 110 for identifying and/or disabling a battery pack, in accordance with aspects of the present disclosure. In certain embodiments, the first battery pack 104 may be an existing battery pack that is at the end of its life cycle, performs inefficiently, and/or is damaged. The first battery pack 104 may have been in operation and utilized with one or more power tools 102 on the job site for a period of time, before it is identified as a battery pack that should no longer be in operation on the job site. In certain embodiments, the second battery pack 106 may be a new battery pack that is purchased or provided to the user to replace or exchange an existing battery pack that is at the end of its life cycle, performing inefficiently, and/or damaged. As an example, the second battery pack 106 may be automatically provided as part of a warranty or lease contract in order to replace an existing battery pack. In particular, it may be beneficial to remove battery packs that are at the end of their life cycles, perform inefficiently, and/or are damaged in order to improve the safety and efficiency of operating power tools 102 on the job site. Furthermore, it may be beneficial to remove these battery packs in order to prevent theft, misuse of old battery packs, proper disposal of old battery packs, and/or to ensure that old battery packs are properly returned to the manufacturer.

In certain embodiments, the communications system 110 may be configured to identify an existing battery pack (e.g., the first battery pack 104) that has been replaced and/or exchanged for a new battery pack (e.g., the second battery pack 106). Further, the communications system 110 may be configured to disable the first battery pack 104 by sending a "lock" command. In certain embodiments, the communications system 110 may be configured to disable the first battery pack 104 by sending unique identification information of the first battery pack 104 to the battery pack charger and/or gateway 108. Further, if the first battery pack 104 is then coupled to the battery pack charger and/or gateway 108, the battery pack charger and/or gateway 108 may be configured to send a "lock" command to the first battery pack 104. In certain embodiments, the battery pack charger and/or gateway 108 may be configured to force a self-discharge of the first battery pack 104. In certain embodiments, the communications system 110 may be utilized to transmit unique identification information of the first battery pack 104 that has been exchanged and/or replaced to the second battery pack 106. Further, the second battery pack 106 may be configured to transfer this unique identification information to the power tool 102 and/or the battery pack charger and/or the gateway 108 when the second battery pack 106 is removably coupled to these devices. Accordingly, if the first battery pack 104 is improperly re-coupled to the power tool 102, the battery pack charger and/or the gateway 108, the power tool 102 and/or the battery pack charger/gateway 108 may be configured to send a "lock" command to the first battery pack 104. Further, the power tool 102, the battery pack charger and/or the gateway 108 may additionally be configured to force a self-discharge of the first battery pack 104 in order to prevent further misuse of the first battery pack 104.

In certain embodiments, the power tool 102 may be a cordless power tool configured to receive power from battery packs that are currently in operation on the job site (e.g., the first battery pack 104 in certain situations or the second battery pack 106). In certain embodiments, the power tool 102 includes a motor, a housing assembly, a trigger, and control circuity that is configured to control one or more components of the power tool 102. In certain embodiments, the power tool 102 includes one or more sensors, such as, for example, safety sensors, position and/or orientation sensors, touch sensors, pressure sensors, accelerometers, temperature sensors, proximity and displacement sensors, image sensors, level sensors, gyroscopes, force sensors, speed sensors, etc. The one or more sensors may be configured to gather operating information about the power tool 102.

In certain embodiments, the first and second battery packs 104, 106 may include a battery management system 140, one or more cells 142, a processor 144, a memory 146 and communications circuitry 150. In certain embodiments, the processor 144 may be configured to execute instructions stored on the memory 146 to carry out the functions of the battery packs 104, 106. The memory 146 may be configured to store instructions that are loadable and executable on the processor 144. In certain embodiments, the memory 146 may be volatile (such as a random access memory (RAM)) and/or nonvolatile (such as read-only memory (ROM), flash memory, etc.). In certain embodiments, the battery management system 140 may be configured to monitor and regulate the rechargeable battery packs 104 and 106. For example, the battery management system 140 may be configured to determine a state of health (SOH), a state of power (SOP), state of safety (SOS), a state of charge (SOC), charge levels, temperature, historical information related to number of charge cycles, voltage and/or current information, calculating secondary data, controlling or regulating surrounding environment, balancing the battery pack, determining which information to report to external devices via the communications circuitry 150, and other functions typical of a battery management system. The communications circuitry 150 of the battery packs 104, 106 may utilize any form of wired or wireless communications (e.g., Bluetooth, NFC, Wifi, ZigBee, LoRa, LoRaWAN, Sigfox, Cellular, etc.) to wirelessly transmit and/or receive information between the devices (e.g., the power tool 102, the battery pack charger 108, etc.).

The battery packs 104, 106 may be rechargeable battery packs that are removably and communicatively coupled with the power tool 102 via a tool interface 112. In the illustrated embodiment, the motor is configured to receive power from the removably coupled battery packs 104, 106, thereby enabling the power tool 102 with a cordless capability. The rechargeable battery pack may be a lithium-ion battery pack of various specifications. In particular, the battery packs 104, 106 may be interchangeable devices, that may be configured for use with a plurality of power tools. The tool interface 112 may include one or more contact points that allow power to be transferred between the battery packs 104, 106 and the power tool 102. Further, the tool interface 112 may include one or more contact points that allow the transfer of information (e.g., communications) between the control circuitry of the power tool 102 and the battery packs 104, 106. In particular, in certain embodiments, the second battery pack 106 may be configured to transfer unique identification information of the first battery pack 104 to the power tool 102. The power tool 102 may further be configured to store and utilize this information to identify the first battery pack 104 if the first battery pack 104 is improperly re-coupled to the power tool 102. Further, in certain embodiments, the power tool 102 may be configured to transmit a "lock" command and/or a "discharge" command to the first battery pack 104 through the tool interface 112 if the first battery pack 104 is improperly re-coupled to the power tool 102.

In certain embodiments, the system 100 includes the battery pack charger 108 (and/or the gateway 108). In certain embodiments, the battery pack charger may be configured as a gateway that is utilized to transfer information received from a battery pack (e.g., the first or second battery packs 104, 106) to a cloud-based computing device 114. The battery pack charger 108 may include a charger interface that may be utilized to transfer power and/or information between the battery packs 104, 106 and the battery pack charger 108. In particular, in certain embodiments, the second battery pack 106 may be configured to transfer unique identification information of the first battery pack 104 to the battery pack charger 108. The battery pack charger 108 may further be configured to store and utilize this information to identify the first battery pack 104 if the first battery pack 104 is improperly re-coupled for charging to the battery pack charger 108. Further, in certain embodiments, the battery pack charger 108 may be configured to transmit a "lock" command and/or a "discharge" command to the first battery pack 104 through the charger interface if the first battery pack 104 is improperly re-coupled to the battery pack charger 108.

In certain embodiments, the battery pack charger and/or the gateway 108 may be configured to store, process, transmit and/or receive information. For example, in certain embodiments, the battery pack charger 108 may be configured to transmit information (e.g., operating parameters related to the power tool 102, operating parameter information related to the battery packs 104, 106, and/or unique identification information of the battery packs 104, 106, etc.) to the cloud-based computing device 114. In certain embodiments, the battery pack charger 108 may be configured to receive information (e.g., "lock" commands, unique identification information related to a battery that is replaced or exchanged, unique identification information related to a new battery, "discharge" commands, etc.) from the cloud-based computing device 114. Accordingly, the battery pack charger 108 may be configured to transmit a "lock" command and/or a "discharge" command to the first battery pack 104 through the charger interface if the first battery pack 104 is identified by the cloud-based computing device 112 as a battery pack that has been replaced and/or exchanged. The battery pack charger 108 may utilize cellular communications to transmit and receive information to the cloud-based computing device 114.

The communications system 110 may be a wireless network of one or more devices that enable wireless communications between the first and second battery packs 104, 106, the power tool 102, the battery pack charger and/or the gateway 108, and the cloud-based computing device 114 in one or more different combinations or pathways. For example, the cloud-based computing device 114 may be configured to provide information (e.g., "lock" commands, unique identification information related to a battery that is replaced or exchanged, unique identification information related to a new battery, "discharge" commands, etc.) to the battery packs 104, 106. In certain embodiments, upon receiving the information (e.g., the "lock" or "discharge" commands), the battery packs 104, 106 may be configured to execute the instructions and lock down the battery and/or self-discharge the battery.

In certain embodiments, the cloud-based computing device 114 may be configured to provide information (e.g., "lock" commands, unique identification information related to a battery that is replaced or exchanged, unique identification information related to a new battery, "discharge" commands, etc.) to the battery pack charger/gateway 108 and/or the power tool 102. In certain embodiments, the communications system 110 may be utilized to transmit unique identification information of the first battery pack 104 to the second battery pack 106. In certain embodiments, the communications system 110 may include a remote computing device 116 (e.g., smartphone, tablet, computer, mobile device, gateway, or any processor-enabled device) that receives information from the cloud-based computing device 114 and transmits it to the power tool 102 and/or the battery packs 104, 106. The communications system 110 may utilize any form of wired or wireless communications (e.g., Bluetooth, NFC, Wifi, ZigBee, LoRa, LoRaWAN, Sigfox, Cellular, etc.) to wirelessly transmit and/or receive information between the devices. For example, the wireless protocols utilized may include WiFi (e.g., Institute of Electrical and Electronics Engineers [IEEE] 802.11X, cellular conduits (e.g., high speed packet access [HSPA], HSPA+, long term evolution [LTE], WiMax), near field communications (NFC), Bluetooth, personal area networks (PANs), and the like. In certain embodiments, the communications system 110 may alternate between different forms of wireless communications. For example, the battery pack charger 108 may receive information via cellular from the cloud-based computing device 114, and may be configured to transmit the information to the battery pack 106 via a NFC and/or a wired connection.

The cloud-based computing device 114 may be a service provider providing cloud analytics, cloud-based collaboration and workflow systems, distributed computing systems, expert systems and/or knowledge-based systems. In certain embodiments, the cloud-based computing device 114 may be a data repository that is coupled to an internal or external global database 118. Further, in certain embodiments, the global database 118 may allow computing devices 120 to retrieve information stored within for additional processing or analysis. Indeed, the cloud-based computing device 114 may be accessed by a plurality of systems (computing devices 120 and/or computing devices from back offices/servers 122) from any geographic location, including geographic locations remote from the physical locations of the systems. Accordingly, the cloud 114 may enable advanced collaboration methods between parties in multiple geographic areas, provide multi-party workflows, data gathering, and data analysis, which may be beneficial in efficiently identifying which battery packs on the job site are at the end of their life cycle, perform inefficiently, and/or are damaged. Further, the cloud 114 may enable advanced collaboration methods that efficiently remove these battery packs out of operation and service and help prevent the misuse of old battery packs, help with the proper disposal of old battery packs, and/or ensure that old battery packs are properly returned to the manufacturer.

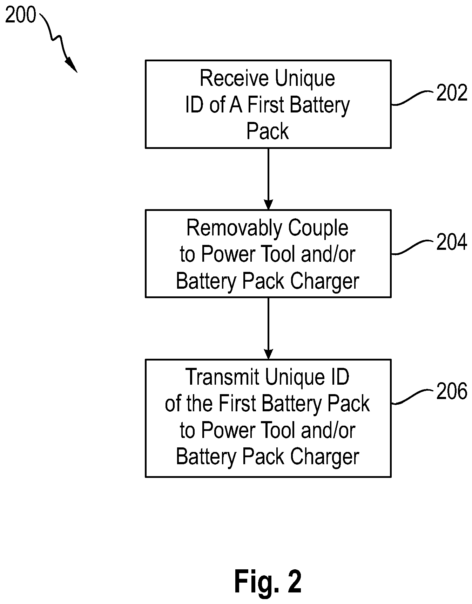

FIG. 2 is an embodiment of a method 200 for transmitting unique identification information of the first battery pack 104 from the second battery pack 106 to the power tool 102 and/or battery pack charger 108 (or the gateway 108), in accordance with aspects of the present disclosure. The method 200 includes receiving, via the second battery pack 106, unique identification information of the first battery pack 104 (block 202). In certain embodiments, the second battery pack 106 may receive this information from the cloud-based computing device 114, from the battery pack charger and/or the gateway 108, and/or from the remote computing device 116. In certain embodiments, the second battery pack 106 may wirelessly receive this information as a manual input from a user and/or the manufacturer. For example, in certain embodiments, the manufacturer may input unique identification information of the first battery pack 104 (e.g., the battery pack identified by the user as one that needs to be replaced or exchanged) into the second battery pack 106 (e.g., the new battery pack purchased or provided to replace or exchange the old battery pack) prior to shipping the second battery pack 106 to the customer.

The method 200 includes removably coupling the second battery pack 106 to the power tool 102 and/or the battery pack charger 108 (block 204). In certain embodiments, the second battery pack 106 (e.g., the new battery pack) may be utilized on the job site with the power tool 102 or may be charged via the battery pack charger 108. Further, the second battery pack 106 may transfer the unique identification information of the first battery pack 102 (e.g., the battery pack identified by the user as one that needs to be replaced or exchanged) to the power tool 102 and/or the battery pack charger 108. In certain embodiments, the information may be transferred from the memory 146 of the second battery pack 106 to the power tool 102 or the battery pack charger 108. In this manner, devices on the job sites are informed of old battery packs identified as being at the end of their life cycle, performing inefficiently, and/or damaged.

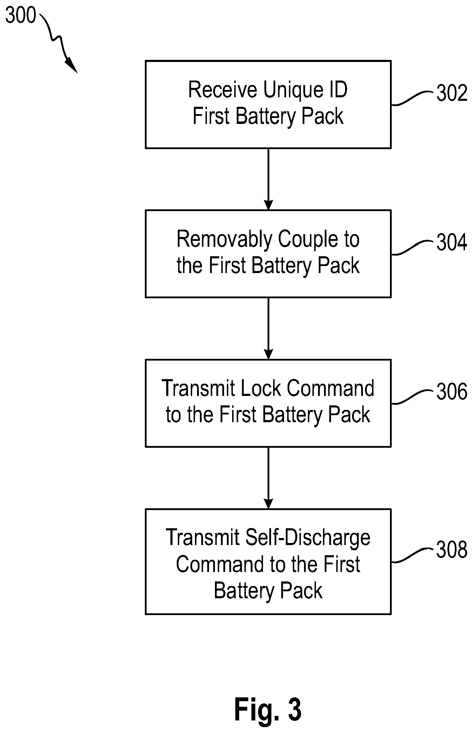

FIG. 3 is an embodiment of a method 300 of transmitting a lock command and/or a self-discharge command to the first battery pack 104 from the power tool 102 and/or the battery pack charger 108, in accordance with aspects of the present disclosure. The method 300 includes receiving, via the power tool 102 and/or the battery pack charger 108, unique identification information of the first battery pack 104 from the second battery pack 106 (block 302). Further, the method 300 includes removably coupling the first battery pack 104 to the power tool 102 and/or the battery pack charger 108 (block 304). The method 300 further includes transmitting a lock command from the power tool 102 and/or the battery pack charger 108 to the first battery pack 104 (block 306) and transmitting a self-discharge command from the power tool 102 and/or the battery pack charger 108 to the first battery pack 104 (block 308).

Accordingly, the power tool device 100 may be configured to inform devices (e.g., the power tool 102 or the battery pack charger 108) of old battery packs (e.g., the first battery pack 104) that have been replaced because they have been identified as being at the end of their life cycle, performing inefficiently, and/or damaged. Specifically, a new battery pack (e.g., the second battery pack 106) that has unique identification information of the old battery pack (e.g., the first battery pack 104) informs the power tool 102 or the battery pack charger 108 when it is coupled to these devices, sometimes at the first time. Accordingly, if an old battery pack (e.g., the first battery pack 104) is knowingly or unknowingly re-coupled to the power tool 102 or the battery pack charger 108, these devices may identify an improper use of an old battery pack and take action to lock and forcibly discharge the old battery pack (e.g., the first battery pack 102). In this manner, the power tool system 100 may be configured to reduce the misuse of old battery packs, improve the proper disposal of old battery packs, and ensure that old battery packs are properly returned to the manufacturer. Further, the power tool system 100 may help remove battery packs that are at the end of their life cycles, perform inefficiently, and/or are damaged in order to improve the safety and efficiency of operating power tools 102 on the job site.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method, comprising:
storing unique identification information of a first battery pack within a second battery pack;
removably coupling the second battery pack to a power tool or a battery pack charger;
transmitting the unique identification information of the first battery pack from the second battery pack to the power tool or the battery pack charger; and
storing the unique identification information of the first battery pack within the power tool or the battery pack charger, wherein the power tool or the battery pack charger is configured to identify the first battery pack with the stored identification information if the first battery pack is re-coupled to the power tool or the battery pack charger.

2. The method of claim 1, wherein the first battery pack is a damaged or inefficient battery pack at the end of its life cycle.

3. The method of claim 1, wherein the second battery pack is a new battery pack configured to replace the first battery pack.

4. The method of claim 1, wherein the power tool or the battery pack charger is configured to transmit a lock command to the first battery pack if the first battery pack is re-coupled to the power tool or the battery pack charger.

5. The method of claim 1, wherein the power tool or the battery pack charger is configured to transmit a self-discharge command to the first battery pack if the first battery pack is re-coupled to the power tool or the battery pack charger.

6. The method of claim 1, comprising wirelessly receiving the unique identification information of the first battery pack via a manual input from a user or a manufacturer.

7. The method of claim 1, comprising wirelessly receiving the unique identification information of the first battery pack from a remote computing device or a cloud-based computing device.

8. A method, comprising:
receiving, via a power tool or a battery pack charger, unique identification information of a first battery pack;
storing the unique identification information of the first battery pack within the power tool or the battery pack charger;
identifying the first battery pack as improperly coupled when it is removably re-coupled to the power tool or the battery pack charger; and
transmitting a lock command from the power tool or the battery pack charger to the first battery pack.

9. The method of claim 8, comprising receiving the unique identification information of the first battery pack from a second battery pack.

10. The method of claim 8, comprising receiving the unique identification information of the first battery pack from a remote computing device or a cloud-based computing device.

11. The method of claim 8, comprising transmitting a self-discharge command from the power tool or the battery pack charger to the first battery pack.

12. The method of claim 8, wherein the first battery pack is a damaged or inefficient battery pack at the end of its life cycle.

13. The method of claim 9, wherein the second battery pack is a new battery pack configured to replace the first battery pack.

14. A method, comprising:
receiving, via a first battery pack, a lock command from a remote computing device; and
receiving, via the first battery pack, a self-discharge command from the remote computing device.

15. The method of claim 14, wherein the remote computing device is a cloud-based computing device.

16. The method of claim 14, wherein the remote computing device is a smartphone, a mobile phone, or a tablet.
